## Europäisches Patentamt

## European Patent Office

## Office européen des brevets

(19)

(11) Veröffentlichungsnummer: **0 181 599**

**B1**

(12) **EUROPÄISCHE PATENTSCHRIFT**

(45) Veröffentlichungstag der Patentschrift:
02.08.89

(51) Int. Cl.⁴: **H 04 N 7/137**

(21) Anmeldenummer: **85114075.6**

(22) Anmeldetag: **05.11.85**

(54) Verfahren und Anordnung zur Verbesserung der Genauigkeit von rekonstruierten Abtastwerten bei mehrdimensionaler DPCM-Codierung.

(30) Priorität: **06.11.84 DE 3440517**

(43) Veröffentlichungstag der Anmeldung:
**21.05.86 Patentblatt 86/21**

(45) Bekanntmachung des Hinweises auf die Patenterteilung:
**02.08.89 Patentblatt 89/31**

(84) Benannte Vertragsstaaten:
**AT BE CH DE FR GB IT LI NL SE**

(56) Entgegenhaltungen:
**ICC '79, CONFERENCE RECORD, Band 3, 10.-14. Juni 1979, Boston, Seiten 52.4.1-52.4.5, IEEE, New York, US; R. LIPPMANN: "Techniques of DPCM picture coding for RPV TV"**

(73) Patentinhaber: **Siemens Aktiengesellschaft Berlin und München, Wittelsbacherplatz 2, D-8000 München 2 (DE)**

(72) Erfinder: **Reimann, Udo, Dipl.- Ing., Johann-Clanze- Strasse 43, D-8000 München 70 (DE)**
Erfinder: **Liegl, Werner, Dipl.- Ing., Blumenstrasse 4, D-8061 Schwabhausen (DE)**

EP 0 181 599 B1

## Beschreibung

Die Erfindung betrifft ein Verfahren zur Verbesserung der Verfahren und Anordnung zur Verbesserung der Genauigkeit von rekonstruierten Abtastwerten bei mehrdimensionaler DPCM-Codierung nach dem Oberbegriff des Patentanspruchs 1 und eine hierzu geeignete Anordnung.

Zur Reduzierung der Datenrate wird bei der Übertragung von Bildsignalen häufig die Diffrenz-Pulscodemodulation (DPCM) verwendet. DPCM-Systeme sind in dem Buch "Digital Television" von R.H. Stafford, Verlag John Wiley & Sons (1980), S. 30 - 58 beschrieben. Der DPCM-Codierer berechnet aus den benachbarten Abtastwerten eines aktuellen Abtastwertes einen sogenannten Schätzwert, vergleicht ihn mit dem aktuellen Abtastwert und sendet die quantisierte Differenz dieser beiden Werte als DPCM-Wert aus. Der Empfänger rekonstruiert die Abtastwerte aufgrund der empfangenen quantisierten DPCM-Werte. Damit die Quantisierungsfehler nicht zu einem größeren Fehler zwischen den rekonstruierten Abtastwerten und den ursprünglichen Abtastwerten führen, wird bei DPCM-Verfahren der DPCM-Codierer so ausgebildet, daß ein rekursiver DPCM-Decodierer in ihm enthalten ist, also dieselben Schätzwerte verwendet werden. Der rekursive Aufbau bewirkt außerdem, daß der Mittelwert des Quantisierungsfehlers bei Null liegt.

Bei der mehrdimensionalen DPCM werden zum aktuellen Abtastwert X benachbarte Abtastwerte zur Berechnung des Schätzwertes ŝ herangezogen. Bei der Zweidimensionalen DPCM werden als benachbarte Abtastwerte häufig der dem aktuellen Abtastwert vorangegangene Abtastwert A, der direkt über dem Abtastwert A liegende Abtastwert B der vorangegangenen Bildzeile und auf diesen folgende Abtastwerte C und D herangezogen. Bei dreidimensionaler DPCM-Codierung werden noch die benachbarten Abtastwerte des vorangegangenen Bildes oder Halbbildes verwendet.

Beispiele für entsprechende Prädiktionsalgorithmen sind in "(ICC '79 Conference Record, Band 3, 10. - 14. Juni 1979, Seiten 52.4.1 - 52.4.5, IEEE)" angegeben.

Problematisch ist jeweils die Codierung des letzten DPCM-Wertes einer Bildzeile und die empfangsseitige Rekonstruktion des letzten Abtastwertes einer Bildzeile, da zum Empfänger nur die DPCM-Werte der Abtastwerte (Bildpunkte) der aktiven Zeile übertragen werden. Die DPCM-Werte Δs für bereits in die Austastlücke fallende Abtastwerte stehen dem Empfänger nicht zur Verfügung und müssen durch einen beliebigen Wert ersetzt werden. Somit kann der letzte Bildpunkt einer aktiven Bildzeile nicht korrekt rekonstruiert werden. Dieser Fehler des rekonstruierten Abtastwertes wirkt sich, da dieser Abtastwert ebenfalls bei der Rekonstruktion von Abtastwerten der nächsten Bildzeile verwendet wird usw., je nach Bildinhalt, bis weit in nachfolgenden aktiven Bildzeilen aus. Dieser Fehler ergibt sich durch die Verwendung unterschiedlicher Schätzwerte auf der Sende- und Empfangsseite.

Aufgabe der Erfindung ist es, ein Verfahren zur Verbesserung der Bildqualität bei mehrdimensionaler DPCM-Codierung und eine geeignete Anordnung hierzu anzugeben.

Ausgehend vom Oberbegriff des Patentanspruchs 1 wird die Aufgabe durch die im kennzeichnenden Teil dieses Patentanspruchs angegebenen Merkmale gelöst. Eine geeignete Anordnung zur Durchführung des Verfahrens ist in den Unteransprüchen angegeben.

Bei diesem Verfahren werden im DPCM-Decodierer und im DPCM-Codierer bei der Berechnung des letzten DPCM-Wertes bzw. bei der Rekonstruktion des letzten aktiven Abtastwertes dieselben Schätzwerte verwendet. Bei weniger üblichen DPCM-Codierverfahren, bei denen jeweils mehrere bereits in der Austastlücke liegende Abtastwerte zur Berechnung der Schätzwerte herangezogen werden, gilt dies für die entsprechende Anzahl der Schätzwerte am Ende einer Bildzeile.

Der exakte Gleichlauf zwischen DPCM-Decodierer und DPCM-Codierer wird beispielsweise erreicht, indem die quantisierten DPCM-Werte gleich Null gesetzt werden. Ebenso können - bei einer üblichen mehrdimensionalen DPCM-Codierung - für den ersten Abtastwert in der Austastlücke und für den letzten Abtastwert der aktiven Bildzeile gleiche Werte verwendet werden. Der Gleichlauf zwischen DPCM-Decodierer und DPCM-Codierer kann auch hergestellt werden, indem rekonstruierten Abtastwertes bzw. des letzten DPCM-Wertes in die entsprechenden Prädiktionseinrichtung eingegeben wird.

Ein Ausführungsbeispiel der Erfindung wird anhand der Fig. 1 bis 6 näher erläutert.

Es zeigen

Fig. 1 eine Auswahlmöglichkeit benachbarter Abtastwerte zur Berechnung des Schätzwertes,

Fig. 2 rekonstruierte Abtastwerte am Bildzeilenende,

Fig. 3 eine Darstellung der Fehlerfortpflanzung am Bildzeilenende,

Fig. 4 eine Auswahlmöglichkeit benachbarter Abtastwerte zur Berechnung des Schätzwertes bei dreidimensionaler DPCM,

Fig. 5 rekonstruierte Abtastwerte am Bildzeilenende,

Fig. 6 rekonstruierte Abtastwerte unter Verwendung konstanter Hilfsabtastwerte,

Fig. 7 einen erfindungsgemäßen DPCM-Codierer und

Fig. 8 einen erfindungsgemäßen DPCM-Decodierer.

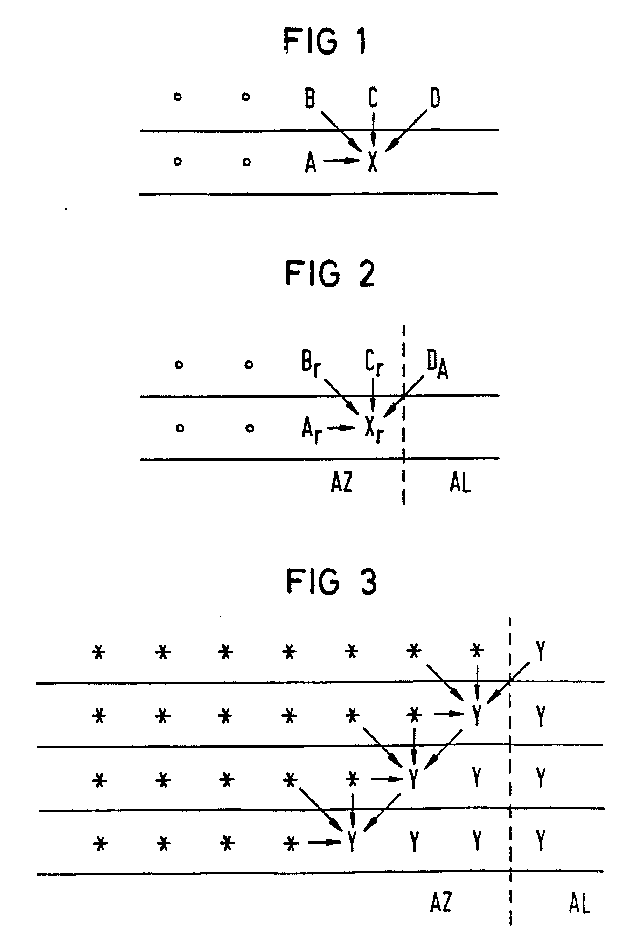

Das Verfahren soll anhand einer zweidimensionalen DPCM-Codierung erläutert werden. In Fig. 1 sind die Abtastwerte (Bildpunkte) zweier aufeinanderfolgender Bildzeilen (Fernsehzeilen) dargestellt In der ersten dargestellten Bildzeile sind dies die Abtastwerte B, C, D und in der darauffolgenden Bildzeile, direkt unter dem Abtastwert B beginnend, die Abtastwerte A und X. Der aktuelle Abtastwert X, gewöhnlich digitalisiert und als Datenwort dem DPCM-Codierer zugeführt, wird mit einem Schätzwert ŝ verglichen, der mit Hilfe der benachbarten Abtastwerte A, B, C und D ermittelt wird. Der aus Schätzwert und aktuellem Abtastwert gebildete quantisierte DPCM-Wert $\Delta s_q$ wird zum Empfänger übertragen.

Aus den quantisierten DPCM-Werten versucht der DPCM-Decodierer die ursprünglichen Abtastwerte zu rekonstruieren. Durch die Quantisierungsfehler weichen die rekonstruierten Abtastwerte jedoch geringfügig von den ursprünglichen Abtastwerten ab.

In Fig. 2 sind die letzten rekonstruierten Abtastwerte zweier aufeinanderfolgender Bildzeilen dargestellt. Bei der Konstruktion des letzten aktuellen Abtastwertes $X_r$ ergeben sich bereits Schwierigkeiten, da ein in der Austastlücke AL befindlicher rekonstruierter Abtastwerte $D_r$ nicht vorliegt, weil der entsprechende DPCM-Wert nicht übertragen wurde. Der letzte übertragene DPCM-Wert einer Bildzeile wurde mit Hilfe der letzten Abtastwerte A, X, B, C der aktiven Bildzeile AZ und eines weiteren bereits in der Austastlücke befindlichen Abtastwertes D gebildet. Wird der Abtastwert D empfangsseitig durch einen anderen Wert ersetzt, so führt dies zunächst zu einem rekonstruierten fehlerhaften Abtastwert $X_r$ und so zu einer Störung des Gleichlaufs zwischen DPCM-Decodierer und DPCM-Codierer.

In Fig. 3 ist die Fehlerfortpflanzung bei dem nach Fig. 1 erfolgten Prädiktionsalgorithmus dargestellt. Mit * sind richtig rekonstruierte und mit Y fehlerhaft rekonstruierte Abtastwerte bezeichnet. Bei dem verwendeten DPCM-Codierverfahren kann sich somit, je nach Bildinhalt, ein Fehler bei der Rekonstruktion bis weit in die nachfolgenden aktiven Bildzeilen auswirken.

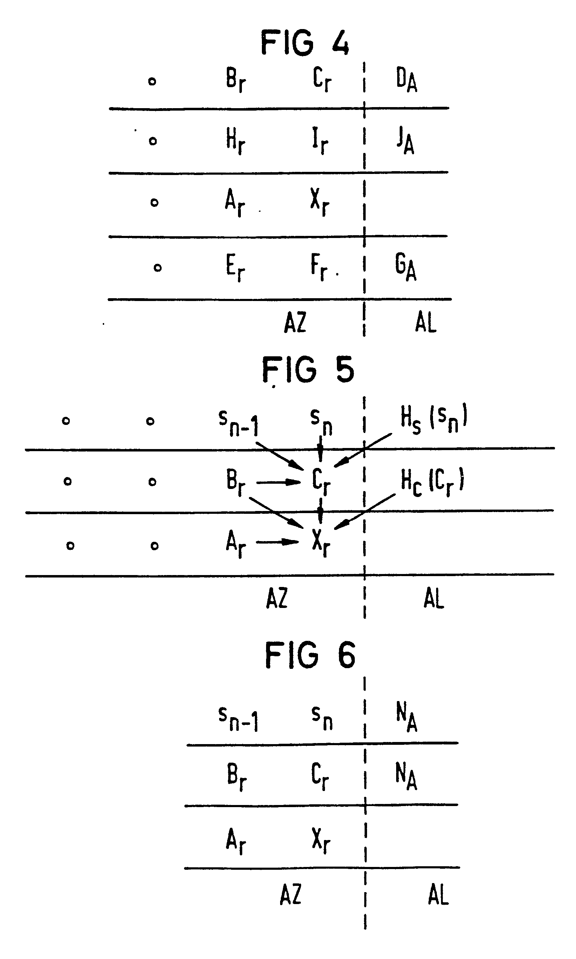

In Fig. 4 sind die benachbarten Schätzwerte für eine dreidimensionale DPCM-Codierung dargestellt. Die Schätzwerte E, F, G und H, I, J gehören hierbei dem letzten Halbbild an. Bei einer Rekonstruktion des letzten Abtastwertes einer Fernsehzeile müssen daher mehrere bereits in die Austastlücke AL fallende Schätzwerte $D_A$, $J_A$ und $G_A$ berücksichtigt werden. Es ist natürlich auch hier möglich, wenn auch unüblich, Prädiktionsalgorithmen zu verwenden, bei denen mehr als ein Schätzwert je Bildzeile in die Austastlücke fällt.

Erfindungsgemäß wird jeder erste in die Austastlücke fallende Abtastwert und ebenso eventuell weitere in die Austastlücke fallende Abtastwerte empfangsseitig und sendeseitig vereinbarungsgemäß durch dieselben rekonstruierten Hilfsabtastwerte H durch die letzten rekonstruierten Abtastwerte einer Bildzeile $s_n$, $C_r$ oder durch konstante Hilfsabtastwerte $N_A$ ersetzt, wie aus Fig. 5 und Fig. 6 ersichtlich ist.

Aus Fig. 3 ist zu entnehmen, daß auch durch die Übertragung zusätzlicher in die Austastlücke AL reichender DPCM-Werte bei den angegebenen Prädiktionsalgorithmen eine Vermeidung von falsch rekonstruierten Abtastwerten wegen der Fehlerfortpflanzung nicht möglich ist.

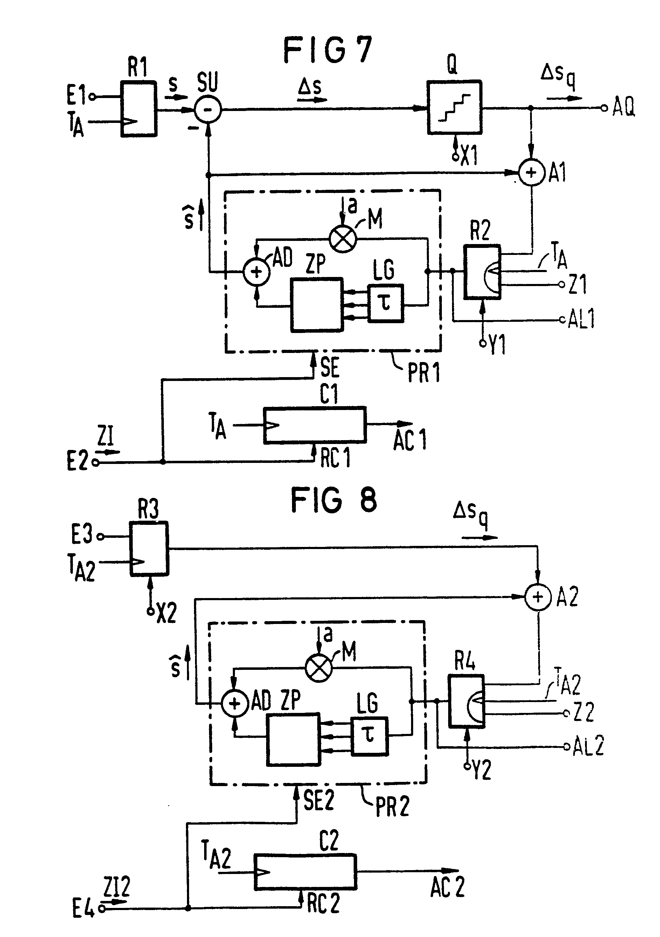

In Fig. 7 ist ein DPCM-Codierer dargestellt. Die digitalisierten Abtastwerte s werden über einen ersten Eingang E1 einem ersten Register R1 zugeführt. Der Ausgang dieses Registers ist mit dem Eingang eines Subtrahierers SU verbunden, dessen Ausgang an den Eingang eines Quantisierers Q angeschlossen ist.

Der Ausgang AQ des Quantisierers Q ist mit einem Eingang eines ersten Addierers A1 verbunden, dessen Ausgang über ein zweites Register R2 und einen ersten Prädiktor PR1 auf den Subtraktionseingang des Subtrahierers SU geführt und außerdem auf den zweiten Eingang des ersten Addierers A1 rückgeführt ist. Der Ausgang des zweiten Registers R2 bildet den sogenannten lokalen Ausgang AL1, an dem die rekonstruierten Abtastwerte $s_r$ abgegeben werden. Der erste Prädiktor PR1 enthält einen Multiplizierer H dessen Eingang an den Ausgang des zweiten Registers R2 angeschaltet ist und dessen Ausgang mit dem ersten Eingang eines Addierers AD verbunden ist. Der Multiplizierer M multipliziert seine Eingangswerte mit einem konstanten Faktor "a". Parallel zum Multiplizierer M liegt die Reihenschaltung eines Laufzeitgliedes LG und eines Zeilenprädiktors ZP, dessen Ausgang mit dem zweiten Eingang des Addierers AD verbunden ist. Der Ausgang des Addierers bildet den Ausgang des ersten Prädiktors PR1. Außerdem ist als Zeitglied ein Binärzähler C1 vorgesehen, an dessen Takteingang ein Arbeitstakt $T_A$ anliegt, der die Periode der Abtastwerte aufweist, und auch dem ersten und dem zweiten Register zu geführt ist. Der Ausgang AC1 des ersten Binärzählers C1 ist entweder mit einem Setzeingang X1 des Quantisierers Q, mit einem Rücksetzeingang Y1 des zweiten Registers R2 oder mit dessen Übernahme-Steuereingang Z1 verbunden. Der Binärzähler weist ebenfalls einen Rücksetzeingang RC1 auf, dem der Zeilenimpuls Z1 über einen Eingang E2 zugeführt ist. Der Zeilenimpuls liegt ebenfalls an dem Setzeingang SE des ersten Prädiktors PR1 und greift - hier nicht dargestellt - gegebenenfalls am Rücksetzeingang des zweiten Registers R2 ein. Der in Fig. 7 dargestellte DPCM-Codierer weist eine übliche Schaltungsanordnung auf. Das erfindungsgemäße Verfahren kann jedoch mit beliebig strukturierten Codierern und Decodierern durchgeführt werden.

Dem Subtrahierer SU wird über das erste Register R1 der digitalisierte Abtastwert s zugeführt. Durch die Differenzbildung mit dem vom ersten Prädiktor PR1 abgegebenen Schätzwert ŝ wird das DPCM-Signal $\Delta s$ ermittelt, das dem Eingang des Quantisierers Q zugeführt wird. Am Ausgang AQ des Quantisierers werden die quantisierten DPCM-Werte $\Delta s_q$ abgegeben und dem ersten Addierer A1 zugeführt. Durch Addition mit dem am zweiten Addierereingang anliegenden Schätzwert ŝ wird der rekonstruierte Abtastwert $s_r$ ermittelt und dem ersten Prädiktor PR1 zur Berechnung des nächsten Schätzwertes zugeführt. Je nach Ausführung des Zeilenprädiktors weist das Laufzeitglied LG eine unterschiedliche Anzahl von Anzapfungen auf, bzw. enthält mehrere Laufzeitglieder. Durch den Zeilenimpuls ZI wird zu Beginn einer jeden Bildzeile in den Prädiktor PR1 und gegebenenfalls in das zweite Register R2 eingegriffen. Dies ist notwendig, da bei der Berechnung des ersten DPCM-Signales unter Verwendung des ersten aktuellen Bildpunktes X nach Fig. 1 die ersten Bildpunkte A und B wieder außerhalb der aktiven Bildzeile liegen. Dies ist jedoch nicht Bestandteil der Erfindung und braucht hier nicht näher erläutert zu werden.

Dem in Fig. 8 dargestellten DPCM-Decodierer ist ein drittes gegebenenfalls rücksetzbares Register R3 vorgeschaltet, dem über einen Eingang E3 die quantisierten DPCM-Werte $\Delta s_q$ zugeführt werden. Der Ausgang dieses Registers ist mit dem ersten Eingang eines zweiten Addierers A2 verbunden, dessen Ausgang über ein viertes Register R4 mit einem Zweiten Prädiktor PR2 Verbunden ist, dessen Ausgang - wie beim DPCM-Codierer - auf den zweiten Eingang des zweiten Addierers A2 rückgekoppelt ist. Der zweite Prädiktor PR2 ist mit dem ersten Prädiktor PR1 identisch. Am Ausgang des vierten Registers R4 werden die rekonstruierten Abtastwerte $s_r$ an den lokalen Ausgang AL2 abgegeben Der DPCM-Decodierer weist einen zweiten Binärzähler C2 auf, dessen Takteingang der empfangsseitige Arbeitstakt $T_{A2}$ zugeführt ist und dessen Ausgang AC2 entweder mit dem Rücksetzeingang X2 des dritten Registers R3 mit dem Rücksetzeingang X2 des vierten Registers R4 oder mit dessen Übernahme-Steuereingang Z2 verbunden ist. Ein über einen vierten Eingang E4 zugeführter empfangsseitiger Zeilenimpuls ZI2 ist dem Rüksetzeingang RC2 des zweiten Binärzählers C2, dem Setzeingang SE2 des zweiten Prädiktors PR2 und gegebenenfalls dem Rücksetzeingang Y2 des vierten Registers R4 zugeführt. Den Registern R3 und R4 ist wiederum der Arbeitstakt $T_{A2}$ zugeführt.

Die Funktion dem DPCM-Decodierers entspricht der inneren Rechenschleife des DPCM-Codierers.

Unter der Voraussetzung, daß ein Prädiktionsalgorithmus nach Fig. 1 verwendet wird, soll zunächst die Funktion des DPCM-Decodierers erläutert werden. Mit jedem Zeilenimpuls ZI2 wird der Binärzähler C2 zurückgesetzt bzw. eingestellt. Die Rekonstruktion der Abtastwerte $s_r$ geschieht während der aktiven Zeile in der üblichen Weise. Gegen Ende einer Bildzeile soll beispielsweise der Wert $C_r$ nach Fig. 5 rekonstruiert werden. Dies ist nur unter Zuhilfenahme der rekonstruiert Abtastwerte $s_{n-1}$, $s_n$ und - nicht empfangsseitig vorhandenen - $s_{n+1}$ der vorangegangenen Bildzeile möglich. Da der DPCM-Wert für $s_{n+1}$ nicht übertragen wurde, wird satt

$s_{n+1}$ der Hilfsabtastwert $H_s$ zur Berechnung von $C_r$ verwendet. Die Hilfsabtastwerte können auf verschiedene Weise ermittelt werden. Der Hilfsabtastwert $H_s$ (Fig. 5) wird beispielsweise errechnet, indem durch den Ausgang AC2 des zweiten Binärzählers C2 das rücksetzbare Register R3 über seinen Rücksetzeingang X2 auf Null gesetzt wird. Dem zweiten Addierer A2 wird hierdurch ein DPCM-Wert $\Delta s_q = 0$ zugeführt und mit einem zusätzlichen Arbeitstakt verarbeitet. Der zusätzlich berechnete Hilfsabtastwert wird in den Zeilenprädiktor ZP eingespeichert und am Ende der nächsten Bildzeile zur Berechnung von $X_r$ verwendet.

Im DPCM-Codierer entspricht dieser Maßnahme die Eingabe eines DPCM-Wertes $\Delta s_q = 0$ in den ersten Addierer A1. Dies kann beispielsweise durch Setzen der Quantisiererausgänge auf Null erfolgen, durch die Eingabe eines entsprechenden DPCM-Signals $\Delta s$ in den Quantisierer oder durch Rücksetzen eines Registers, das dem Quantisierer bei einer zeitlich unkritischen Schaltungsausführung nachgeschaltet ist. Da bei dieser Methode zur Errechnung von $H_c$ auch noch die nicht rekonstruierbaren. Abtastwerte $s_{n+2}$ benötigt werden, ist es zweckmäßig, für diese einen mittleren Grauwert zu wählen oder sogar den Zeilenprädiktor auf Null zu setzen. Anstelle des Rücksetzers auf Null kann natürlich ebenso - wenn realisierbar - das Einschreiben von Null in die entsprechenden Register erfolgen.

Als Hilfsabtastwert H kann auch beim DPCM-Decodierer der letzte rekonstruierte Wert $C_r$ der aktiven Bildzeile AZ verwendet werden. In diesem Fall werden die Übernahmesteuereingänge Z2 des vierten Registers R4 des DPCM-Decodierers und Z1 des zweiten Registers R2 des DPCM-Codierers durch die Ausgänge AC2 und AC1 der Binärzähler C2, C1 gesperrt und so der Arbeitstakt $T_A$ bzw. $T_{A2}$ unwirksam, so daß an den lokalen Ausgängen AL2, AL1 jeweils als Hilfsabtastwert derselben rekonstruierte Werte $C_r$ abgegeben und in den Prädiktor eingespeichert wird. DPCM-Decodierer und DPCM-Codierer führen folglich wieder dieselben Rechenoperationen durch.

Als dritte Möglichkeit werden das vierte Register R4 des DPCM-Decodierers und das zweite Register R2 des DPCM-Codierers nach dem Ende einer aktiven Zeile auf Null - dies entspricht dem mittleren Grauwert - über die Eingänge Y2 bzw. Y1 zurückgesetzt und dieser in die Prädiktoren eingespeichert. Dies Verfahren ist übersichtlicher als die beiden vorstehenden Verfahren. Da jedoch Fehler ohne die erfindungsgemäßen Maßnahmen ohnehin nur bei bestimmten Bildinhalten deutlich sichtbar sind, ist diese Maßnahme bereits ausreichend.

Für die Rekonstruktion der Zeilenanfänge, der ersten (obersten) Zeile und bei der beschriebenen dreidimensionalen Prädiktion auch der letzten Zeile werden als Hilfsabtastwerte zweckmäßigerweise wieder mittlere Grauwerte verwendet.

Alle drei beschriebenen Maßnahmen zur Verbesserung der Bildqualität bewirken, daß im Decodierer und im Codierer dieselben Berechnung durchgeführt werden. Sie können bei beliebig aufgebauten Codierern und Decodierern angewendet werden. Der Binärzähler oder ein anders ausgeführtes Zeitglied ist im allgemeinen zur zeitgerechten Einfügung der Bildimpulse und zur Steuerung während der aktiven Bildzeilendauer ohnehin vorhanden.

**Patentansprüche**

1. Verfahren zur Verbesserung der Genauigkeit von rekonstruierten Abtastwerten $(X_r)$ am Bildrand bei mehrdimensionaler DPCM-Codierung, bei der jeweils mindestens ein zur Berechnung eines Schätzwertes $(\hat{s})$ und des zugehörigen DPCM-Wertes $(\Delta s_q)$ verwendeter Abtastwert (D) einer vorangegangenen Bildzeile nach dem aktuellen Abtastwert (X) liegt,
dadurch gekennzeichnet
daß empfangsseitig nach dem Ende einer aktiven Bildzeile (AZ) jeweils der letzte rekonstruierte Abtastwert $(C_r...)$ um jeweils mindestens einen der Austastlücke zugeordneten Hilfsabtastwert $(H_c...)$ ergänzt wird, daß unter Verwendung dieser Hilfsabtastwerte $(H_c...)$ jeweils die Abtastwerte $(X_r...)$ am Ende der folgenden aktiven Bildzeile rekonstruiert werden und daß vereinbarungsgemäß sende- und empfangsseitig dieselben Hilfsabtastwerte $(H_c...)$ zur Codierung Verwendet werden.

2. Verfahren nach Anspruch 1,
dadurch gekennzeichnet
daß empfangsseitig nach Verarbeitung der DPCM-Werte $(\Delta s_q)$ jeder aktiven Bildzeile (AZ) zusätzlich mindestens ein DPCM-Wert $(\Delta s_q)$ der Größe Null zur Berechnung der Hilfsabtastwerte (H) verwendet wird.

3. Verfahren nach Anspruch 1,
dadurch gekennzeichnet,
daß empfangsseitig als Hilfsabtastwerte $(H_s, H_c...)$ jeweils die vorstehenden rekonstruierten letzten Abtastwerte $(s_n, C_r)$ der aktiven Bildzeile (AZ) verwendet werden.

4. Verfahren nach Anspruch 1,
dadurch gekennzeichnet,
daß für die Hilfsabtastwerte (H) ein konstanter Wert $(N_A)$ verwendet wird.

5. Verfahren nach Anspruch 4,
dadurch gekennzeichnet,
daß der konstante Wert $(N_A)$ einem mittleren Grau entspricht.

6. Verfahren nach einem der vorhergehenden Ansprüche,
dadurch gekennzeichnet,
daß in jeder Bildzeile nur ein einziger Hilfsabtastwert (H) zur Berechnung des letzten rekonstruierten Abtastwertes $(X_r)$ der aktiven Bildzeile (AZ) verwendet wird.

7. Schaltungsanordnung zur Durchführung des Verfahrens nach Anspruch 2 zur Verbesserung der Genauigkeit von rekonstruierten Abtastwerten $(X_r)$ am Bildrand bei mehrdimensionaler DPCM-Codierung mit einem DPCM-Codierer und einem DPCM-Decodierer,
dadurch gekennzeichnet,
daß der DPCM-Codierer einen steuerbaren Quantisierer (Q) enthält, daß der DPCM-Decodierer ein vorgeschaltetes rücksetzbares Register (R3) enthält, daß im DPCM-Codierer ein erstes Zeitglied (C1) vorgesehen ist, dessen Ausgang (AC1) mit dem Setzeingang (X1) des Quantisierers verbunden ist, und daß im DPCM-Decodierer ein zweites Zeitglied (C2) vorgesehen ist, dessen Ausgang (AC2) mit dem Rücksetzeingang (X2) des rücksetzbaren Registers (R3) verbunden ist, und daß der Quantisierer (Q) und das rücksetzbare Register (R3) nach Ende der aktiven Bildzeile auf dieselben Hilfsabtastwerte (H) gesetzt werden.

8. Schaltungsanordnung zur Durchführung des Verfahrens nach Anspruch 3 zur Verbesserung der Genauigkeit von rekonstruierten Abtastwerten $(X_r)$ am Bildrand bei mehrdimensionaler DPCM-Codierung mit einem DPCM-Codierer und einem DPCM-Decodierer,
dadurch gekennzeichnet,
daß im DPCM-Codierer ein erstes Zeitglied (C1) und ein erster Prädiktor (PR1) mit einem vorgeschalteten zweiten Register (R2) vorgesehen ist, bei dem die Informationsübernahme steuerbar ist, daß der Übernahme-Steuereingang (Z1) des zweiten Registers (R2) an den Ausgang (AC1) des ersten Zeitgliedes (C1) angeschlossen ist, daß im DPCM-Codierer ein zweites Zeitglied (C2) und ein zweiter Prädiktor (PR2) mit einem vorgeschalteten vierten Register (R4) vorgesehen ist, dessen Übernahme-Steuereingang (Z2) an den Ausgang (AC2) des zweiten Zeitgliedes (C2) angeschlossen ist, und daß die Zeitglieder (C1, C2) so ausgelegt sind, daß der letzte rekonstruierte Abtastwert $(C_r)$ jeder aktiven Bildzeile (AZ) als Hilfsabtastwert gespeichert bleibt.

9. Schaltungsanordnung zur Durchführung des Verfahrens nach Anspruch 4 zur Verbesserung der Genauigkeit von rekonstruierten Abtastwerten $(X_r)$ am Bildrand bei mehrdimensionaler DPCM-Codierung mit einem DPCM-Codierer und einem DPCM-Decodierer,
dadurch gekennzeichnet,
daß im DPCM-Codierer ein erstes Zeitglied (C1) und ein erster Prädiktor (PR1) mit einem vorgeschalteten zweiten Register (R2) vorgesehen ist, das einen Rücksetzeingang (Y1) aufweist, der an den Ausgang (AZ1) des ersten Zeitgliedes (C1) angeschlossen ist, daß im DPCM-Decodierer ein zweites Zeitglied (C2) und ein zweiter Prädiktor (PR2) mit einem vorgeschalteten vierten Register (R4) vorgesehen ist, dessen Rücksetzeingang (Y2) an den Ausgang (AC2) des zweiten Zeitgliedes (C2) angeschlossen ist, und daß beide Register (R2, R4) nach Ende jeder aktiven Bildzeile (AZ) auf einen konstanten Wert $(N_A)$ rückgesetzt werden.

## Claims

1. Method for improving the accuracy of reconstructed samples $(X_r)$ at the edge of a picture in multidemsional DPCM coding, in which in each case at least one sample (D), which is used for calculating an estimated value $(\hat{s})$ and the associated DPCM value $(\Delta s_q)$, of a preceding picture line is located after the current sample (X), characterized in that, after the end of an active picture line (AZ), the last reconstructed sample $(C_r...)$ in each case is supplemented by at least one auxiliary sample $(H_c...)$ in each case which is allocated to the blanking interval on the receiving side, that the samples $(X_r...)$ are in each case reconstructed at the end of the following active picture line, using these auxiliary samples $(H_c...)$ and that, by convention, the same auxiliary samples $(H_c...)$ are used for coding on the transmitting and receiving side.

2. Method according to Claim 1, characterized in that, after the DPCM values $(\Delta s_q)$ of each active picture line (AZ) have been processed, additionally at least one DPCM value $(\Delta s_q)$ of magnitude zero is used for calculating the auxiliary samples (H) on the receiving side.

3. Method according to Claim 1, characterized in that the preceding reconstructed last samples $(s_n, C_r)$ of the active picture line (AZ) are in each case used as auxiliary samples $(H_s, H_c...)$ on the receiving side.

4. Method according to Claim 1, characterized in that a constant value $(N_A)$ is used for the auxiliary samples (H).

5. Method according to Claim 4, characterized in that the constant value $(N_A)$ corresponds to a medium grey.

6. Method according to one of the preceding Claims, characterized in that in each picture line only a single auxiliary sample (H) is used for calculating the last reconstructed sample $(X_r)$ of the active picture line (AZ).

7. Circuit arrangement for carrying out the method according to Claim 2 for improving the accuracy of reconstructed samples $(X_r)$ at the edge of a picture, in multidimensional DPCM coding comprising a DPCM coder and a DPCM decoder, characterized in that the DPCM coder contains a controllable quantizer (Q), that the DPCM decoder contains a preceding resettable register (R3), that a first timing section (C1), the output of which (AC1) is connected to the set input (X1) of the quantizer, is provided in the DPCM coder, and that a second timing section (C2), the output of which (AC2) is connected to the reset input (X2) of the resettable register (R3), is provided in the DPCM decoder, and that the quantizer (Q) and the resettable register (R3) are set to the same auxiliary samples (H) after the end of the active picture line.

8. Circuit arrangement for carrying out the method according to Claim 3 for improving the accuracy of reconstructed samples $(X_r)$ at the edge of a picture in multidimensional DPCM coding, comprising a DPCM coder and a DPCM decoder, characterized in that a first timing section (C1) and a first predictor (PR1) with a preceding second register (R2), in which the information transfer is controllable, are provided in the DPCM coder, that the transfer control input (Z1) of the second register (R2) is connected to the output (AC1) of the first timing section (C1), that a second timing section (C2) and a second predictor (PR2) with a preceding fourth register (R4), the transfer control input (Z2) of which is connected to the output (AC2) of the second timing section (C2), are provided in the DPCM coder, and that the timing sections (C1, C2) are designed in such a manner that the last reconstructed sample $(C_r)$ of each active picture line (AZ) remains stored as auxiliary sample.

9. Circuit arrangement for carrying out the method according to Claim 4 for improving the accuracy of reconstructed samples $(X_r)$ at the edge of a picture in multidimensional DPCM coding, comprising a DPCM coder and a DPCM decoder, characterized in that a first timing section (C1) and a first predictor (PR1) with a preceding second register (R2), which exhibits a reset input (Y1), which is connected to the output (AZ1) of the first timing section (C1), are provided in the DPCM coder, that a second timing section (C2) and a second predictor (PR2) with a preceding fourth register (R4), the reset input (Y2) of which is connected to the output (AC2) of the second timing section (C2), are provided in the DPCM decoder, and that both registers (R2, R4) are reset to a constant value $(N_A)$ after the end of each active picture line (AZ).

## Revendications

1. Procédé pour améliorer la précision de valeurs d'échantillonnage reconstituées $(X_r)$ au niveau du bord de l'image, dans le cas d'un codage MICD multidimensionnel, selon lequel respectivement au moins une valeur d'échantillonnage (D), utilisée pour le calcul d'une valeur estimée $(\hat{j}$ et de la valeur MICD associée $(\Delta s_q)$ d'une ligne précédente de l'image se situe après la valeur actuelle d'échantillonnage (X), caractérisé par le fait que, côté réception, à la fin d'une ligne active (AZ) de l'image, respectivement la dernière valeur d'échantillonnage reconstituée $(C_r...)$ est complétée respectivement par au moins une valeur d'échantillonnage auxiliaire $(H_c...)$, associée à l'intervalle de suppression, qu'en utilisant ces valeurs d'échantillonnage auxiliaires $(H_c...)$ on reconstitue respectivement les valeurs d'échantillonnage $(X_r...)$ à la fin de la ligne active suivante de l'image, et que, par convention, on utilise, côté émission et côté réception, les mêmes valeurs d'échantillonnage auxiliaires $(H_c...)$ pour le codage.

2. Procédé suivant la revendication 1, caractérisé par le fait que, côté réception, après traitement des valeurs MICD $(\Delta s_q)$ de chaque ligne active (AZ) de l'image, on utilise en outre au moins une valeur MICD ($\Delta s_q$) possédant la valeur zéro pour calculer les valeurs d'échantillonnage auxiliaires (H).

3. Procédé suivant la revendication 1, caractérisé par le fait que, côté réception, on utilise, comme valeurs d'échantillonnage auxiliaires ($H_s$, $H_c$,...), respectivement les dernières valeurs d'échantillonnage précédentes reconstituées ($s_n$, $C_r$) de la ligne active (AZ) de l'image.

4. Procédé suivant la revendication 1, caractérisé par le fait que, pour les valeurs d'échantillonnage auxiliaires (H), on utilise une valeur constante ($N_A$).

5. Procédé suivant la revendication 4, caractérisé par le fait que la valeur constante ($N_A$) correspond à un gris moyen.

6. Procédé suivant l'une des revendications précédentes, caractérisé par le fait que dans chaque ligne de l'image, on utilise uniquement une seule valeur d'échantillonnage auxiliaire (H) pour calculer la dernière valeur d'échantillonnage reconstituée ($X_r$) de la ligne active (AZ) de l'image.

7. Montage pour la mise en oeuvre du procédé suivant la revendication 2 pour améliorer la précision de valeurs d'échantillonnage reconstituées ($X_r$) au niveau du bord de l'image, dans le cas d'un codage MICD multidimensionnel utilisant un codeur MICD et un décodeur MICD, caractérisé par le fait que le codeur MICD contient un quantificateur commandable (Q), que le décodeur MICD contient un registre (R3) monté en amont et pouvant être ramené à l'état initial, qu'il est prévu, dans le codeur MICD, un premier circuit d'horloge (C1), dont la sortie (AC1) est reliée à l'entrée de positionnement (X1) du quantificateur, et qu'il est prévu, dans le décodeur MICD, un second circuit d'horloge (C2), dont la sortie (AC2) est reliée à l'entrée de remise à l'état initial (X2) du registre (R3) pouvant être ramené à l'état initial, et que le quantificateur (Q) et le registre (R3), qui peut être amené à l'état initial, sont positionnés sur les mêmes valeurs d'échantillonnage auxiliaires (H), à la fin de la ligne active de l'image.

8. Montage pour la mise en oeuvre du procédé suivant la revendication 3 pour améliorer la précision de valeurs d'échantillonnage reconstituées ($X_r$) au niveau du bord de l'image, dans le cas d'un codage MICD multidimensionnel utilisant un codeur MICD et un décodeur MICD, caractérisé par le fait qu'il est prévu, dans le codeur MICD, un premier circuit d'horloge (C1) et un premier dispositif de prédiction (PR1) comportant un second registre (R2), qui est monté en amont et dans lequel le transfert d'informations peut être commandé, que l'entrée de commande de transfert (Z1) du second registre (R2) est raccordée à la sortie (AC1) du premier circuit d'horloge (C1), qu'il est prévu, dans le décodeur MICD, un second circuit d'horloge (C2) et un second dispositif de prédiction (PR2), en amont duquel est monté un quatrième registre (R4), dont l'entrée de commande de transfert (Z2) est raccordée à la sortie (AC2) du second circuit d'horloge (C2), et que les circuits d'horloge (C1, C2) sont agencés de manière que la dernière valeur d'échantillonnage reconstituée ($C_r$) de chaque ligne active (AZ) de l'image reste mémorisée en tant que valeur d'échantillonnage auxiliaire.

9. Montage pour la mise en oeuvre du procédé selon la revendication 4 pour améliorer la précision de valeurs d'échantillonnage reconstituées ($X_r$) au niveau du bord de l'image, dans le cas d'un codage MICD multidimensionnel, utilisant un codeur MICD et un décodeur MICD, caractérisé par le fait qu'il est prévu, dans le codeur MICD, un premier circuit d'horloge (C1) et un premier dispositif de prédiction (PR1), en amont duquel est monté un second registre (R2), qui comporte une entrée (Y1) de remise à l'état initial, qui est raccordée à la sortie (AZ1) du premier circuit d'horloge (C1), qu'il est prévu, dans le décodeur MICD, un second circuit d'horloge (C2) et un second dispositif de prédiction (PR2), en amont duquel est monté un quatrième registre (R4), dont l'entrée de remise à l'état initial (Y2) est raccordée à la sortie (AC2) du second circuit d'horloge (C2), et que les deux registres (R2, R4) sont ramenés à une valeur constante ($N_A$), à la fin de chaque ligne active (AZ) de l'image.

# FIG 1

# FIG 2

# FIG 3

# FIG 4

|   | $B_r$ | $C_r$ | $D_A$ |
|---|-------|-------|-------|
| o |       |       |       |
| o | $H_r$ | $I_r$ | $J_A$ |
| o | $A_r$ | $X_r$ |       |
| o | $E_r$ | $F_r$ | $G_A$ |
|   |  AZ   |       |  AL   |

# FIG 5

|   |   | $s_{n-1}$ | $s_n$ | $H_s(s_n)$ |
|---|---|-----------|-------|------------|
| o | o | $B_r$ | $C_r$ | $H_c(C_r)$ |
| o | o | $A_r$ | $X_r$ |   |
|   |   |  AZ   |       |  AL  |

# FIG 6

| $s_{n-1}$ | $s_n$ | $N_A$ |
|-----------|-------|-------|
| $B_r$ | $C_r$ | $N_A$ |
| $A_r$ | $X_r$ |   |
|  AZ   |       |  AL   |

3

# FIG 7

# FIG 8